# EUROPEAN PATENT APPLICATION

(11) **EP 4 667 329 A1**
(43) Date of publication of application: **24.12.2025**
(21) Application number: 25181635.1
(22) Date of filing: 10.06.2025
(51) Int. Cl.: B62D 25/08, B62D 29/00

(54) **VEHICLE BODY STRUCTURE, MOLD CONFIGURED TO MOLD A VEHICLE BODY STRUCTURE, AND METHOD OF MANUFACTURING A VEHICLE BODY FRAME MEMBER**

(30) Priority: 17.06.2024 JP 2024097318
(71) Applicant: MAZDA MOTOR CORPORATION, Hiroshima 730-8670 (JP)
(72) Inventor: SHIMANAKA, Tsuneki, Aki-gun, Hiroshima, 730-8670 (JP)
(74) Representative: Müller-Boré & Partner Patentanwälte PartG mbB

(57) **Abstract**

A vehicle body frame member (100) that is integrally molded by casting in a state where a right rear suspension tower portion (110) and a left rear suspension tower portion (120) are coupled by a coupling portion (130) is integrally molded with at least one rib (116a) in a manner to protrude forward or rearward in a vehicle. The vehicle body frame member (100) is cast in a posture in which the rib (116a) protrudes upward or downward.

## Description

### [Technical Field]

The present invention relates to a vehicle body structure and a mold configured to mold a vehicle body structure. The present invention also relates to a method of manufacturing a vehicle body frame member of an automobile, for example.

### [Background Art]

For example, in a rear portion of an automobile, a rear suspension tower portion, to which an upper portion of a damper of a suspension device is attached, is provided on each of left and right sides. For example, Patent Literature 1 discloses that a reinforcing member that includes a rear suspension tower portion is integrally molded by aluminum die casting. A rib is also integrally molded with this reinforcing member.

### [Citation List]

### [Patent Literature]

[Patent Literature 1] JP2020-44885A

### [Summary]

### [Technical Problem]

Here, from a viewpoint of reducing the number of parts of a vehicle body, it is considered to obtain a frame member in a rear portion of the vehicle body by coupling the rear suspension tower portion on the right side and the rear suspension tower portion on the left side by an intermediate coupling portion and, in such a state, integrally molding those by casting. In order to secure rigidity, the rib has to be integrally molded with such a frame member.

By the way, the frame member is a member that is obtained by coupling the left and right rear suspension tower portions by the coupling portion, and thus is a large member. In order to downsize a mold, which is used when molding such a large frame member, as much as possible, it is desired to set a direction to downsize a projection surface of the frame member as a moving direction of the mold.

As described above, the size of the frame member has to be taken into consideration when the moving direction of the mold is set. Meanwhile, there is also a demand to set a direction of the rib to be such a direction that a reinforcing effect is prioritized when the rib is integrally molded with the frame member.

The present invention has been made in view of such a point, and an object thereof is to downsize a projection surface during casting and to improve rigidity to an input load during a collision.

### [Solution to Problem]

The above object is achieved by the invention as defined in the independent claims. Particularly, one aspect is a method for manufacturing a vehicle body frame member, particularly a rear vehicle body frame member, in which a suspension tower portion, particularly a rear suspension tower portion, on one side in a vehicle width direction and a suspension tower portion, particularly a rear suspension tower portion, on another side in the vehicle width direction are coupled by a coupling portion and that is integrally or unitarily molded with at least one rib that protrudes forward or rearward in a vehicle in an assembled state. In this manufacturing method, a mold whose division direction is set to an up-down direction (or a vertical direction) is prepared, and the rear vehicle body frame member is cast in a state of being rotated, in a vehicle side view, in a direction in which a dimension (or a length) of a projection surface from above in a direction orthogonal to the vehicle width direction is shorter than a dimension (or a length) of a projection surface in the direction orthogonal to the vehicle width direction in a vehicle plan view. In addition, the rear vehicle body frame member is cast in a posture that the rib protrudes upward or downward

According to this configuration, since the rear suspension tower portion on the one side in the vehicle width direction, the rear suspension tower portion on the other side in the vehicle width direction, and the coupling portion are integrally or unitarily molded, the number of components is reduced. In addition, since the rear vehicle body frame member is integrally or unitarily molded with the rib that protrudes forward or rearward in the vehicle, the rear vehicle body frame member can be highly rigid to input of an impact load from the rear, for example. When this rear vehicle body frame member is cast, the rib is in the posture of protruding upward or downward, and the dimension of the projection surface from above in the direction orthogonal to the vehicle width direction is shorter than the dimension of the projection surface in the direction orthogonal to the vehicle width direction in the vehicle plan view. Thus, the projection surface during casting is downsized, and thus a mold to be used during molding can also be downsized.

The rib may extend along a vehicle front-rear direction or may be inclined with respect to the vehicle front-rear direction. By integrally or unitarily molding such a rib, sufficient rigidity can be secured.

The rib may continue from at least one of the rear suspension tower portion on the one side in the vehicle width direction and the rear suspension tower portion on the other side in the vehicle width direction to the coupling portion. In this way, the rear suspension tower portion and the coupling portion can be connected by the rib, and thus the rigidity of the vehicle body frame member can further be increased.

The vehicle body frame member may include a coupling member that couples an upper portion of the rear suspension tower portion on the one side in the vehicle width direction and an upper portion of the rear suspension tower portion on the other side in the vehicle width direction. In this case, the coupling member can integrally or unitarily be molded with the upper portion of the rear suspension tower portion on the one side in the vehicle width direction and the upper portion of the rear suspension tower portion on the other side in the vehicle width direction, and the coupling member is positioned in an extending direction of the rib. Thus, when the rib is in the posture that protrudes in the up-down direction, it is possible to downsize the projection surface of the vehicle body frame member that includes the coupling member.

The rib may include: an inner rib that is integrally or unitarily molded on a vehicle inner side of the rear suspension tower portion; and an outer rib that is integrally or unitarily molded on a vehicle outer side of the rear suspension tower portion. In this case, the coupling member can be arranged at a position away from the upper portion of the rear suspension tower portion on the one side in the vehicle width direction and the upper portion of the rear suspension tower portion on the other side in the vehicle width direction in a direction parallel to the extending direction of the rib.

Another aspect is a vehicle body structure (or a vehicle body frame member), particularly a rear vehicle body structure (or a rear vehicle body frame member), in which a suspension tower portion, particularly a rear suspension tower portion, on one side in a vehicle width direction and a suspension tower portion, particularly a rear suspension tower portion, on another side in the vehicle width direction are coupled by a coupling portion and that is integrally or unitarily molded with at least one rib that protrudes forward or rearward in a vehicle. The rear vehicle body structure includes a concave portion that is formed to be opened forward in the vehicle and recessed rearward in the vehicle, and an upper wall portion and a lower wall portion of the concave portion extend in the same direction as the rib. In this way, the rib and the concave portion can easily and integrally or unitarily be molded by a mold that moves in an up-down direction while downsizing a projection surface during casting.

### [Advantageous Effects]

As it has been described so far, according to the present invention, it is possible to downsize the projection surface during casting of the vehicle body frame member, in which the rear suspension tower portion on the one side in the vehicle width direction and the rear suspension tower portion on the other side in the vehicle width direction are coupled by the coupling portion, and to improve the rigidity to the input load during a collision.

### [Brief Description of Drawings]

[FIG. 1] FIG. 1 is a side view of an automobile that has a vehicle body structure according to an embodiment of the invention.
[FIG. 2] FIG. 2 is a plan view of the vehicle body structure.

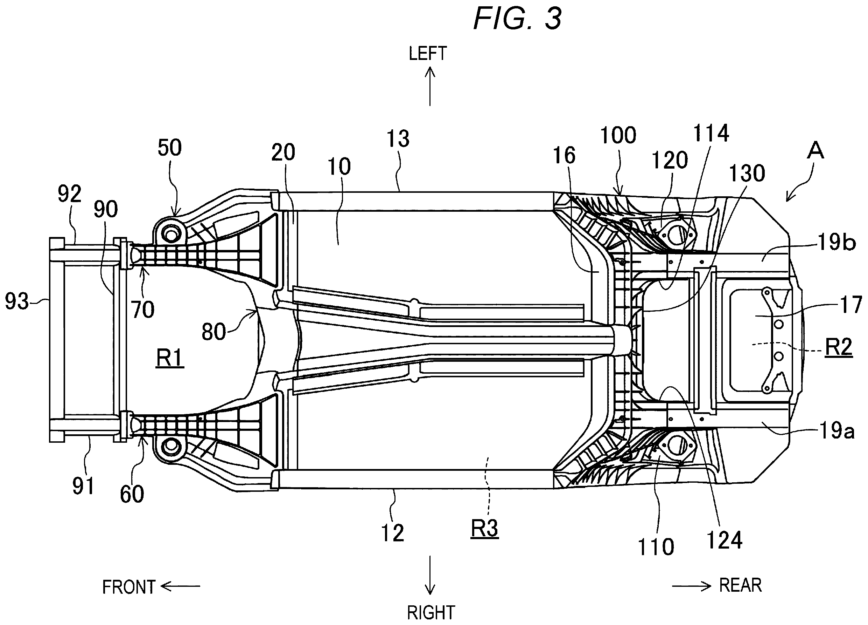

[FIG. 3] FIG. 3 is a bottom view of the vehicle body structure.
[FIG. 4] FIG. 4 is a perspective view of a rear frame member.
[FIG. 5] FIG. 5 is a plan view of the rear frame member.
[FIG. 6] FIG. 6 is a front view of the rear frame member.
[FIG. 7] FIG. 7 is a right view of the rear frame member.
[FIG. 8] FIG. 8 is a cross-sectional view that is taken along line VIII-VIII in FIG. 6.
[FIG. 9] FIG. 9 is a side view illustrating a state immediately after casting.
[FIG. 10] FIG. 10 is a view corresponding to FIG. 9 according to a modified example of the embodiment.
[FIG. 11] FIG. 11 is a cross-sectional view that is taken along line XI-XI in FIG. 6.

### [Description of Embodiments]

A detailed description will hereinafter be made on an embodiment of the invention with reference to the drawings. It should be noted that the following description of the preferred embodiment is merely illustrative in nature and is not intended to limit the invention, application subjects thereof, or application thereof.

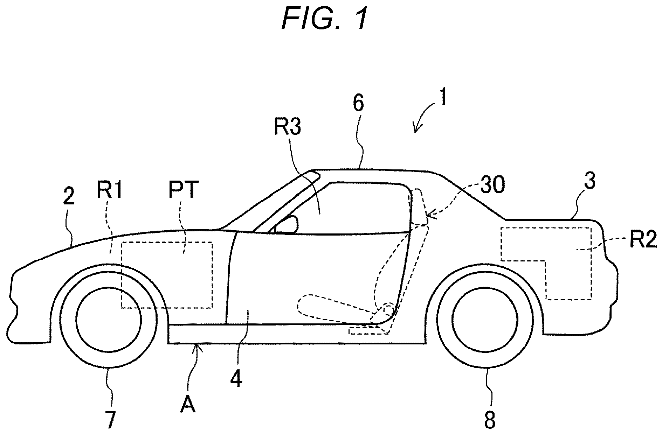

FIG. 1 is a side view of a vehicle, particularly an automobile 1, that includes a vehicle body structure, particularly a rear vehicle body structure A, according to the embodiment of the invention. In the description of this embodiment, a vehicle front side will simply be referred to as "front", a vehicle rear side will simply be referred to as "rear", a vehicle right side will simply be referred to as "right", and a vehicle left side will simply be referred to as "left". A vehicle left-right direction is a vehicle width direction.

The automobile 1 is a passenger automobile, for example, and may be an automobile of a coupe type, a hatchback type, or a sedan type, for example. The automobile 1 may be an automobile that is equipped with an internal combustion engine that generates a driving force transmitted to drive wheels, may be an electric vehicle that is equipped with a travel motor that generates a driving force transmitted to drive wheels, or may be a hybrid vehicle that generates a driving force transmitted to drive wheels by an internal combustion engine and a driving force generation motor. The internal combustion engine and/or the motor constitute a powertrain PT.

A bonnet hood 2 may be provided in a front portion of the automobile 1. A front space R1 in which the powertrain PT is mounted when necessary is provided below the bonnet hood 2.

A rear hood 3 may be provided in a rear portion of the automobile 1. A rear space R2 capable of accommodating baggage and the like may be provided below the rear hood 3.

Instead of mounting the powertrain PT in the front space R1, a powertrain (not illustrated) may be mounted in the rear space R2. In this case, the front space R1 can be used as a space for accommodating the baggage and the like. Alternatively, the powertrain may be mounted in both the front space R1 and the rear space R2.

A left door 4 and a right door (not illustrated) are openably and/or closably provided in a left portion and a right portion of the automobile 1, respectively. The automobile 1 may also include front wheels 7 and rear wheels 8 on left and right sides. At least one of the front wheel 7 and the rear wheel 8 can be a drive wheel.

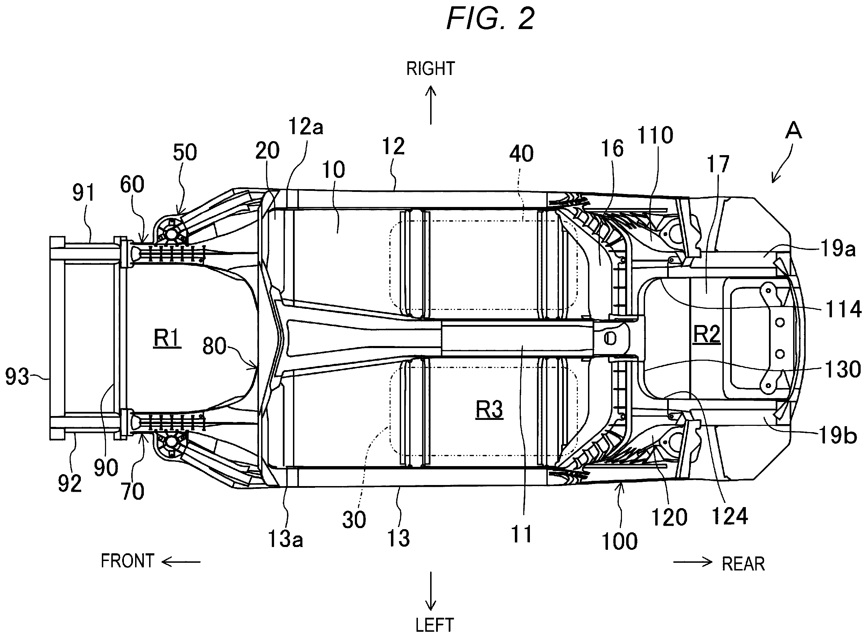

A cabin R3 as e.g., a living space for an occupant is provided between the front space R1 and the rear space R2. As illustrated in FIG. 2, the automobile 1 may include: a floor panel 10 that forms a floor surface of the cabin R3; and a dash panel 20 that forms a front wall of the cabin R3. The rear vehicle body structure A of the automobile 1 may also include: an inclined panel 16 that extends upward from a rear end portion of the floor panel 10 and is inclined rearward toward the above; and/or a rear panel 17 that extends rearward from an upper end portion of the inclined panel 16.

A tunnel portion 11 that bulges upward and extends in a front-rear direction may be formed in a central portion of the floor panel 10 in the left-right direction. The automobile 1 may further include: a right side sill 12 that extends in the front-rear direction along a right edge of the floor panel 10; and a left side sill 13 that extends in the front-rear direction along a left edge of the floor panel 10.

A right hinge pillar 12a that extends upward may be provided in a front portion of the right side sill 12. The right hinge pillar 12a is a member that supports the right door. A left hinge pillar 13a that extends upward may be provided in a front portion of the left side sill 13. The left hinge pillar 13a is a member that supports the left door 4.

A front end portion of the tunnel portion 11 may be located in a front end portion of the floor panel 10, and a rear end portion of the tunnel portion 11 may be located in the rear end portion of the floor panel 10. Thus, the tunnel portion 11 has a shape that continuously extends from the front end portion to the rear end portion of the floor panel 10.

For example, the automobile 1 is a right-hand drive vehicle. Thus, the automobile 1 may include a passenger seat 30 as a left seat (seating) and a driver's seat 40 as a right seat (seating) on a left side and a right side of the tunnel portion 11 on the floor panel 10, respectively.

Particularly, the passenger seat 30 is provided on the left side of the tunnel portion 11 on the floor panel 10, and the passenger seat 30 is arranged between the tunnel portion 11 and the left side sill 13. The driver's seat 40 is provided on the right side of the tunnel portion 11 on the floor panel 10, and the driver's seat 40 is arranged between the tunnel portion 11 and the right side sill 12. Thus, the passenger seat 30 and the driver's seat 40 are arranged side by side in the left-right direction in a manner to sandwich the tunnel portion 11. Here, the automobile 1 may be a left-hand drive vehicle. In this case, the driver's seat 40 may be provided on the left side, and the passenger seat 30 may be provided on the right side. Further, a rear seat may be provided behind the driver's seat 40 and the passenger seat 30.

The dash panel 20 may be a member that extends upward and in the left-right direction from the front end portion of the floor panel 10 and that divides the cabin R3 and the front space R1 located on the front side of the cabin R3. The front end portion of the tunnel portion 11 is connected to a central portion in the left-right direction of a lower portion of the dash panel 20.

A front cast member 50 is provided in the front portion of the automobile 1. For example, the front cast member 50 includes a right front side frame 60, a left front side frame 70, and a coupling portion 80 that couples the right front side frame 60 and the left front side frame 70.

The front space R1 is provided between the right front side frame 60 and the left front side frame 70. The right front side frame 60, the left front side frame 70, and the coupling portion 80 may be integrally or unitarily molded by casting.

A rear portion of the left front side frame 70 and a rear portion of the right front side frame 60 may be fixed to the dash panel 20. A rear portion of the coupling portion 80 may be fixed to front portions of the dash panel 20 and the tunnel portion 11.

When the right front side frame 60, the left front side frame 70, and the coupling portion 80 are fixed to the dash panel 20 and the tunnel portion 11, any of various fixing methods, such as fixing by welding and fastening fixing using a fastening member (including, a self-piercing rivet, for example), can be applied. Of these fixing methods, any one of the fixing methods may be employed, or any two or more of the fixing methods may be used in combination.

The rear vehicle body structure A may include a vehicle body frame member, particularly a rear vehicle body frame member 100. For example, the rear vehicle body frame member 100 that is integrally or unitarily molded by casting is provided above the inclined panel 16.

The rear vehicle body frame member 100 includes a right rear suspension tower portion (a suspension tower portion or a rear suspension tower portion on one side in the vehicle width direction) 110, a left rear suspension tower portion (a suspension tower portion or a rear suspension tower portion on the other side in the vehicle width direction) 120, and a coupling portion 130. The coupling portion 130 is a portion that couples the right rear suspension tower portion 110 and the left rear suspension tower portion 120, and is integrally or unitarily molded by casting in a state where the right rear suspension tower portion 110 and the left rear suspension tower portion 120 are coupled by the coupling portion 130. When the rear vehicle body frame member 100 is manufactured, an aluminum die casting method can be used, for example.

A front end portion of a frame, particularly a right rear frame 19a, that extends in the front-rear direction may be connected to a rear portion of the right rear suspension tower portion 110. For example, the right rear frame 19a is arranged on a vehicle inner side of the right side sill 12 and is located above the right side sill 12.

A front end portion of a frame, particularly a left rear frame 19b, that extends in the front-rear direction may be connected to a rear portion of the left rear suspension tower portion 120. For example, the left rear frame 19b is arranged on the vehicle inner side of the left side sill 13 and is located above the left side sill 13. The rear panel 17 may be provided to connect the right rear frame 19a and the left rear frame 19b. The vehicle may include the right rear frame (19a) and/or the left rear frame (19b).

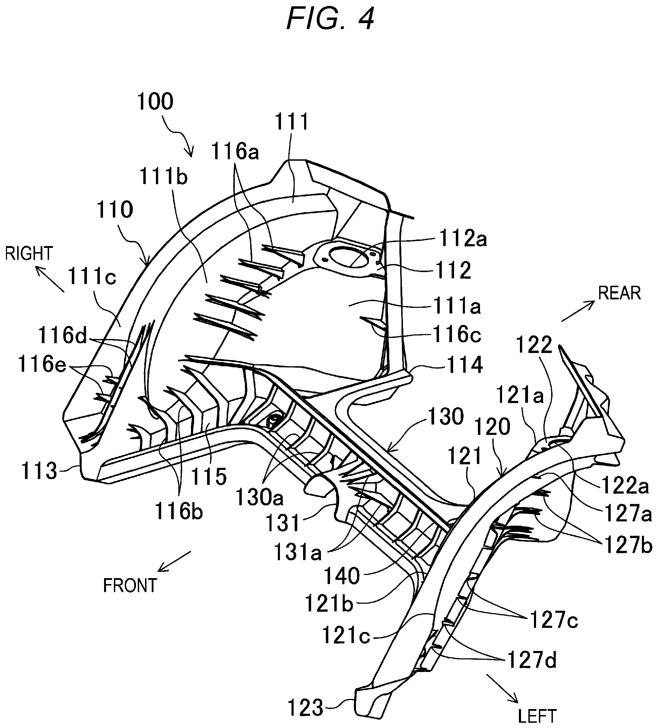

As illustrated in FIG. 4 to FIG. 6, the right rear suspension tower portion 110 may have a right wheelhouse portion 111 that forms a wheelhouse of a right rear wheel (not illustrated). The right wheelhouse portion 111 has a concave shape that extends in an up-down direction (or a vertical direction)_ and the front-rear direction and that is recessed toward the vehicle inner side and the front side. For example, a rear side and a lower side of this right wheelhouse portion 111 are both open, and the right wheelhouse portion 111 thereby has a dome shape.

The right wheelhouse portion 111 may include: a right bulging portion 111a that bulges to the vehicle inner side; and/or a right plate portion 111b that extends in the up-down direction and the front-rear direction from an upper portion to a front portion of the right bulging portion 111a. A right damper attachment portion 112 may be provided near the upper portion of the right bulging portion 111a.

For example, the right damper attachment portion 112 is a plate-shaped portion to which an upper portion of a damper provided in a rear suspension device (not illustrated) is attached, and extends in the front-rear direction and the left-right direction. An opening 112a is formed in the right damper attachment portion 112.

A right flange portion 111c may be formed in a peripheral edge portion of the right plate portion 111b. The right flange portion 111c continuously extends from an upper portion to a lower portion via a front portion of the right wheelhouse portion 111.

A right front connection portion 113 that is connected to a rear end portion of the right side sill 12 may be formed in a front lower portion of the right wheelhouse portion 111. In addition, a right rear connection portion 114, to which the front end portion of the right rear frame 19a is connected, may be formed in a rear lower portion of the right wheelhouse portion 111. The right rear connection portion 114 is located on the vehicle inner side and/or above the right front connection portion 113.

A right load transmission portion 115 that extends from the right front connection portion 113 to the right rear connection portion 114 may be provided in the lower portion of the right wheelhouse portion 111. For example, the right load transmission portion 115 is inclined to be located outward in the vehicle and downward to the front.

The left rear suspension tower portion 120 and the right rear suspension tower portion 110 may have a bilaterally symmetrical structure. For example, when an imaginary line that extends in the front-rear direction through a center of the automobile 1 in the left-right direction is set as a center of the symmetry, the left rear suspension tower portion 120 is line-symmetric with the right rear suspension tower portion 110, and the right rear suspension tower portion 110 is line-symmetric with the left rear suspension tower portion 120.

That is, the left rear suspension tower portion 120 may have a left wheelhouse portion 121 that forms a wheelhouse of the left rear wheel 8 (illustrated in FIG. 1). The left wheelhouse portion 121 has a concave shape that extends in the up-down direction and the front-rear direction and that is recessed toward the vehicle inner side and the front side. For example, a rear side and a lower side of this left wheelhouse portion 121 are both open, and the left wheelhouse portion 121 thereby has a dome shape.

The left wheelhouse portion 121 may include: a left bulging portion 121a that bulges to the vehicle inner side; and a left plate portion 121b that extends in the up-down direction and the front-rear direction from an upper portion to a front portion of the left bulging portion 121a. A left damper attachment portion 122 may be provided in the vicinity of the upper portion of the left bulging portion 121a. The left damper attachment portion 122 is a portion to which an upper portion of a damper provided in a rear suspension device (not illustrated) is attached, and has an opening 122a.

A left flange portion 121c may be formed in a peripheral edge portion of the left plate portion 121b. The left flange portion 121c continuously extends from an upper portion to a lower portion via a front portion of the left wheelhouse portion 121.

A left front connection portion 123 that is connected to a rear end portion of the left side sill 13 may be formed in a front lower portion of the left wheelhouse portion 121. In addition, a left rear connection portion 124, to which the front end portion of the left rear frame 19b is connected, may be formed in a rear lower portion of the left wheelhouse portion 121. The left rear connection portion 124 is located on the vehicle inner side and above the left front connection portion 123.

A left load transmission portion 125 that extends from the left front connection portion 123 to the left rear connection portion 124 may be provided in the lower portion of the left wheelhouse portion 121. For example, the left load transmission portion 125 is inclined to be located outward in the vehicle and downward to the front.

Accordingly, for example, an impact load during a rear collision is input to the right wheelhouse portion 111 via the right rear frame 19a. The impact load that has been input to the right wheelhouse portion 111 is transmitted to the right side sill 12 via the right rear connection portion 114, the right load transmission portion 115, and the right front connection portion 113.

The impact load during the rear collision is input to the left wheelhouse portion 121 via the left rear frame 19b. The impact load that has been input to the left wheelhouse portion 121 is transmitted to the left side sill 13 via the left rear connection portion 124, the left load transmission portion 125, and the left front connection portion 123.

Just as described, since the rear vehicle body frame member 100 is a member that receives the impact load during the rear collision and transmits it to the right side sill 12 and the left side sill 13, it is necessary to increase rigidity to the input of the impact load. Thus, one or more ribs are integrally or unitarily molded with the rear vehicle body frame member 100.

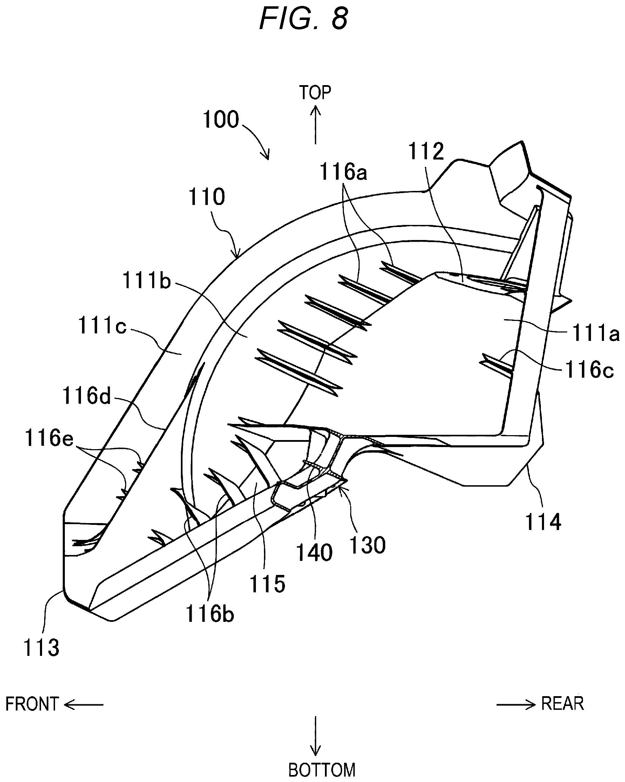

On the vehicle inner side of the right wheelhouse portion 111, a first right inner rib 116a, a second right inner rib 116b, a third right inner rib 116c, a fourth right inner rib 116d, and a fifth right inner rib 116e are integrally or unitarily molded. For example, as illustrated in FIG. 8, the first right inner rib 116a, the second right inner rib 116b, the third right inner rib 116c, the fourth right inner rib 116d, and the fifth right inner rib 116e are ribs that are inclined with respect to the front-rear direction.

Particularly, the plural first right inner ribs 116a are provided, continuously extend from the right plate portion 111b to the front portion of the right bulging portion 111a, and protrude forward. The plural first right inner ribs 116a are spaced apart from each other in the up-down direction.

The uppermost first right inner rib 116a may be located near the right damper attachment portion 112. The lowermost first right inner rib 116a may be located in an intermediate portion in the up-down direction of the right bulging portion 111a.

Further particularly, the plural second right inner ribs 116b are provided, continuously extend from the right plate portion 111b to the right load transmission portion 115, and protrude forward. The plural second right inner ribs 116b are spaced apart from each other in the front-rear direction.

The foremost second right inner rib 116b may be located near a front portion of the right load transmission portion 115. The rearmost second right inner rib 116b may be located near a rear portion of the right load transmission portion 115.

Further particularly, the third right inner rib 116c is provided in a rear portion of the right bulging portion 111a, extends inward in the vehicle, and protrudes forward. Further particularly, the fourth right inner rib 116d continuously extends from an upper surface of the right front connection portion 113 to a front portion of the right plate portion 111b, and protrudes forward.

The plural fourth right inner ribs 116d are spaced apart from each other in the left-right direction. The fifth right inner rib 116e may extend from the fourth right inner rib 116d on the right side to the right flange portion 111c and protrudes forward. The plural fifth right inner ribs 116e may be spaced apart from each other in the up-down direction.

Although not illustrated, the inner rib that is integrally or unitarily molded with the vehicle body frame member 100 may integrally or unitarily be molded in a manner to protrude rearward. The number of the inner rib may be one.

Of the first right inner rib 116a, the second right inner rib 116b, the third right inner rib 116c, the fourth right inner rib 116d, and the fifth right inner rib 116e, any one, two, or more thereof may integrally or unitarily be molded with the vehicle body frame member 100. In addition, the positions of the inner ribs 116a to 116e are not limited to the illustrated positions, and may be any positions.

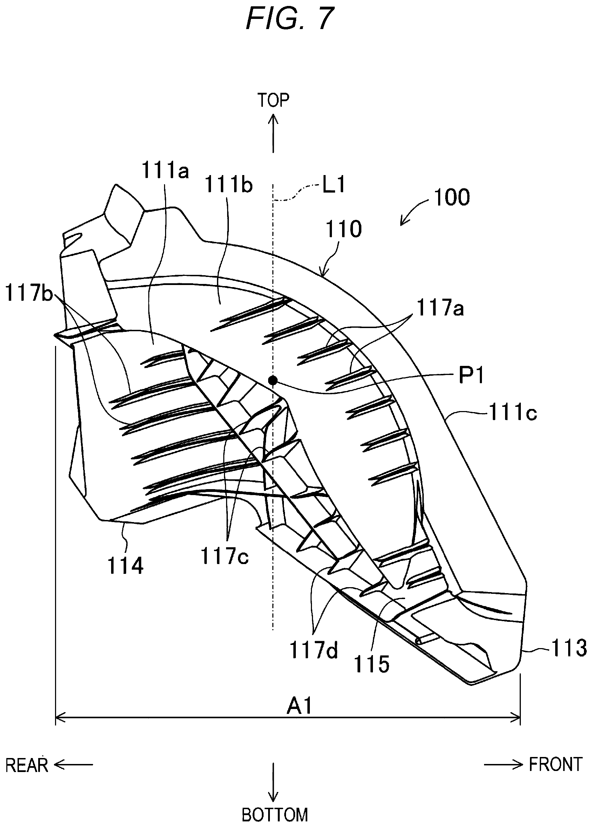

As illustrated in FIG. 7, outer ribs 117a to 117d are integrally or unitarily molded on the vehicle outer side of the right wheelhouse portion 111. That is, in the present embodiment, the ribs of the vehicle body frame member 100 includes the inner ribs 116a to 116e and the outer ribs 117a to 117d.

For example, on the vehicle outer side of the right wheelhouse portion 111, the first right outer rib 117a, the second right outer rib 117b, the third right outer rib 117c, and the fourth right outer rib 117d are integrally or unitarily molded. Particularly, the plural first right outer ribs 117a are provided, extend from the right plate portion 111b to the vehicle outer side, and protrude rearward. The plural first right outer ribs 117a are spaced apart from each other in the up-down direction.

Further particularly, the second right outer rib 117b extends from the right bulging portion 111a to the vehicle outer side and protrude rearward. The plural second right outer ribs 117b are spaced apart from each other in the up-down direction.

Further particularly, the third right outer rib 117c extends from the right bulging portion 111a to the right plate portion 111b, and protrude forward. The plural third right outer ribs 117c are spaced apart from each other in the up-down direction.

Further particularly, the fourth right outer rib 117d extends from the right load transmission portion 115 to the vehicle outer side and protrude rearward. The plural fourth right outer ribs 117d are spaced apart from each other in the front-rear direction.

Although not illustrated, the outer ribs that are integrally or unitarily molded with the vehicle body frame member 100 may integrally or unitarily be molded in a manner to protrude forward. The number of the outer rib may be one. Of the first right outer rib 117a, the second right outer rib 117b, the third right outer rib 117c, and the fourth right outer rib 117d, any one, two, or more thereof may integrally or unitarily be molded with the vehicle body frame member 100. In addition, the positions of the outer ribs 117a to 117d are not limited to the illustrated positions, and may be any positions.

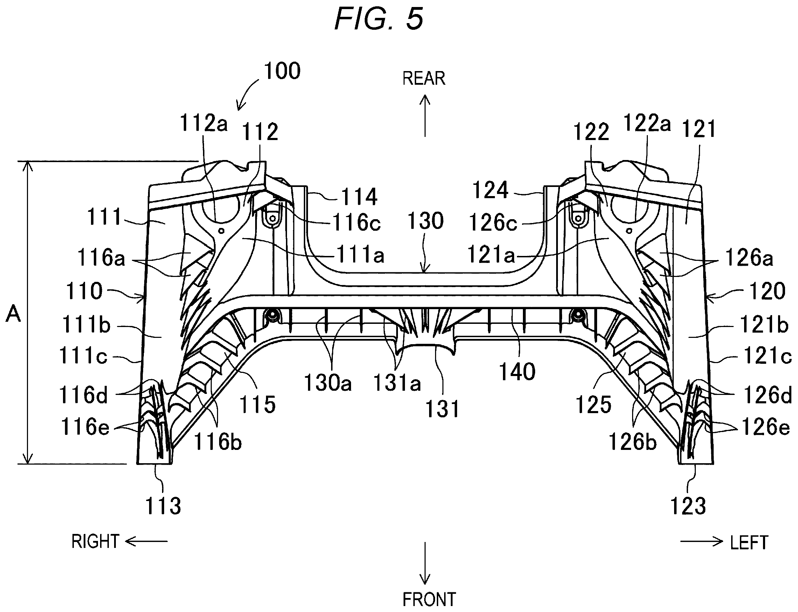

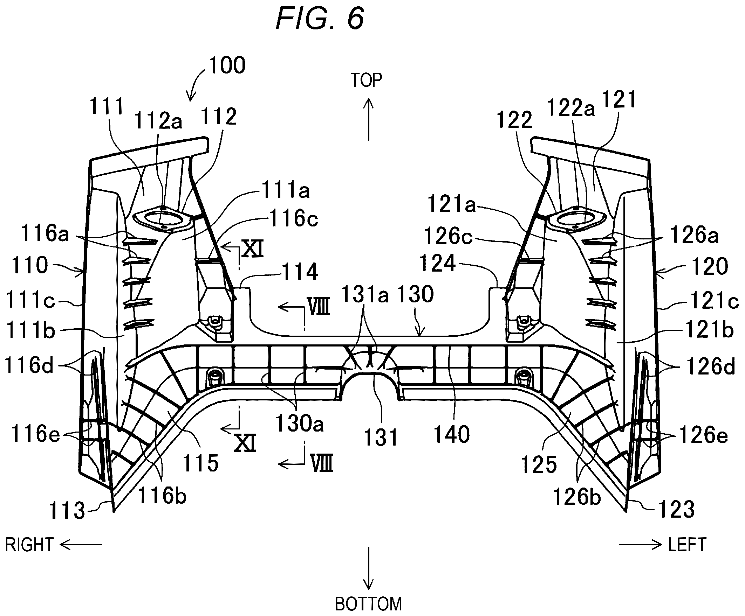

As illustrated in FIG. 5 and FIG. 6, on the vehicle inner side of the left wheelhouse portion 121, similar to the right wheelhouse portion 111, a first left inner rib 126a, a second left inner rib 126b, a third left inner rib 126c, a fourth left inner rib 126d, and a fifth left inner rib 126e may be integrally or unitarily molded.

As illustrated in FIG. 4, on the vehicle outer side of the left wheelhouse portion 121, similar to the right wheelhouse portion 111, a first left outer rib 127a, a second left outer rib 127b, a third left outer rib 127c, and a fourth left outer rib 127d may be integrally or unitarily molded.

As illustrated in FIG. 5 and FIG. 6, the coupling portion 130 extends in the left-right direction e.g., from an intermediate portion in the front-rear direction in a lower portion of the right rear suspension tower portion 110 to an intermediate portion in the front-rear direction in a lower portion of the left rear suspension tower portion 120. As also illustrated in FIG. 4, plural first lower ribs 130a, each of which protrudes forward and extends in the up-down direction, may be provided on a front surface of the coupling portion 130 at spaced intervals from each other in the left-right direction.

Particularly, a curved plate portion 131 that is curved upward is provided in a center portion in the left-right direction of the coupling portion 130. On an upper surface of the curved plate portion 131, plural second lower ribs 131a, each of which protrudes upward and extends forward, may be provided at spaced intervals from each other in a circumferential direction of the curved plate portion 131.

The rear vehicle body frame member 100 may include a long rib 140 that continues from the right rear suspension tower portion 110 to the coupling portion 130 and continues to the left rear suspension tower portion 120. A right portion of the long rib 140 is integrally or unitarily molded with the front portions of the right bulging portion 111a and the right plate portion 111b.

For example, a left portion of the long rib 140 is integrally or unitarily molded with front portions of the left bulging portion 121a and the left plate portion 121b. The long rib 140 may be a rib that continues from the right rear suspension tower portion 110 to the coupling portion 130, or may be a rib that continues from the left rear suspension tower portion 120 to the coupling portion 130.

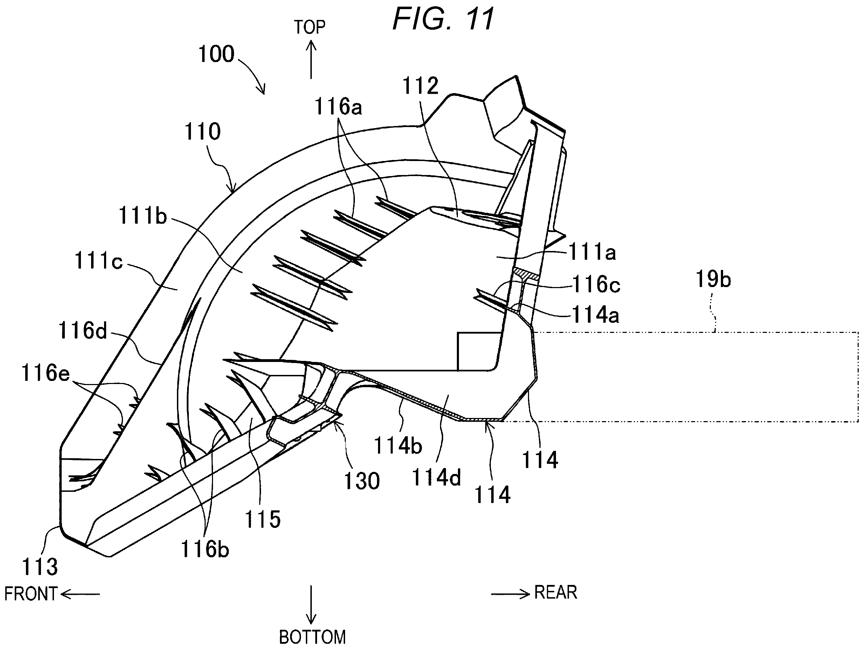

As illustrated as a cross-sectional view in FIG. 11, the right rear connection portion 114 may be formed as a concave portion that is opened forward and is recessed rearward. For example, the right rear connection portion 114 has: an upper wall portion 114a and a lower wall portion 114b; a rear wall portion 114c that extends from a rear end portion of the upper wall portion 114a to a rear end portion of the lower wall portion 114b; and/or both left and right side wall portions 114d.

Particularly, the upper wall portion 114a and the lower wall portion 114b of the right rear connection portion 114 both extend in the front-rear direction and, more specifically, extend in the same direction as (substantially parallel to) the ribs 116a to 116e, 117a to 117d, 126a to 126e, 127a to 127d, 130a, 131a, and 140.

Since having a hollow shape, the right rear connection portion 114 is a portion that has light weight and high strength. By connecting the front end portion of the right rear frame 19a to this right rear connection portion 114, it is possible to increase support rigidity of the front end portion of the right rear frame 19a.

### (Method for Manufacturing Rear Vehicle Body Framework Member 100)

Next, a description will be made on a method for manufacturing the rear vehicle body frame member 100. A posture at the time of assembling the rear vehicle body frame member 100 to the vehicle is the posture illustrated in FIG. 7 when viewed from the side. FIG. 7 illustrates a state where the assembly to the vehicle is completed (an assembly completion state), and in a side view of the rear vehicle body frame member 100 in the assembly completion state, a straight line L1 that passes through a center point P1 of the rear vehicle body frame member 100 is virtually drawn. The straight line L1 is set to have an angle of 0° with respect to a vertical plane and an angle of 90° with respect to a horizontal plane, so as to be a line that extends vertically when the rear vehicle body frame member 100 is in the assembly completion state.

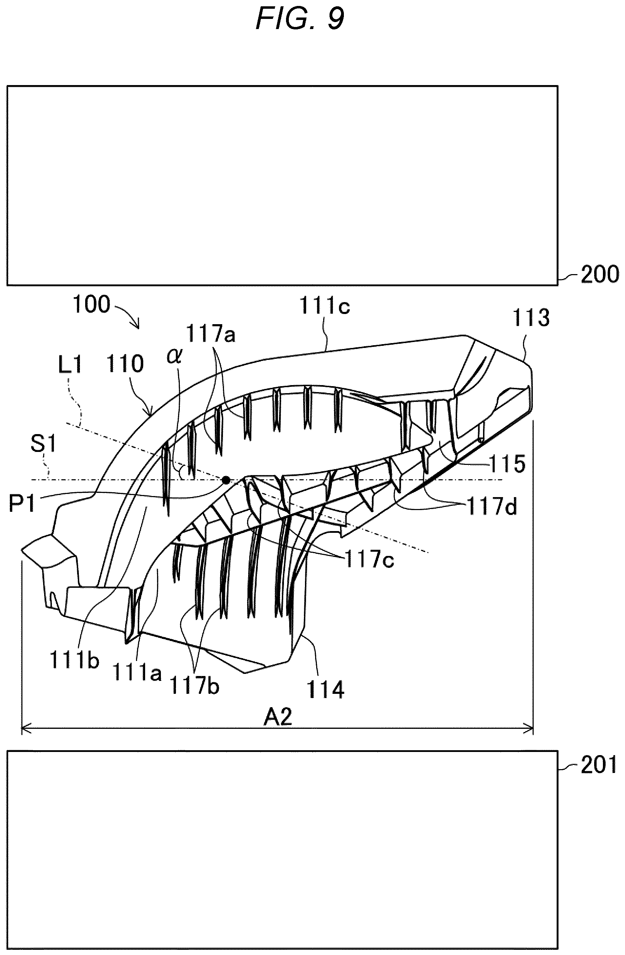

Meanwhile, during casting, as illustrated in FIG. 9, the angle of the rear vehicle body frame member 100 is set such that the straight line L1 is inclined. In FIG. 9, the rear vehicle body frame member 100 is in a posture in which the ribs 116a to 116e, 117a to 117d, 130a, 131a, and 140 protrude upward or downward, and is cast in this posture. Although not illustrated in FIG. 9, the upper wall portion 114a and the lower wall portion 114b of the right rear connection portion 114 illustrated in FIG. 11 are cast in postures that extend upward.

For example, when the rear vehicle body frame member 100 is manufactured, a first mold 200 and a second mold 201, whose division direction is the up-down direction (or the vertical direction), are prepared. In other words, the first mold 200 and the second mold 201 may be divided in the up-down direction.

For example, the first mold 200 is arranged to be an upper mold, and the second mold 201 is arranged to be a lower mold. Although not illustrated, the first mold 200 may be provided with a mold drive device, and may be switched between a mold closed state of being in contact with the second mold 201 and a mold open state of being separated upward from the second mold 201 when being moved in the up-down direction.

Particularly, the first mold 200 and the second mold 201 are each provided with a molding surface (not illustrated), and a cavity (not illustrated), that is formed by the molding surface of the first mold 200 and the molding surface of the second mold 201, is configured to be filled with an aluminum alloy in a molten state. Shapes of the molding surfaces of the first mold 200 and the second mold 201 are to enable casting of the rear vehicle body frame member 100 in the posture illustrated in FIG. 9.

For example, first, the first mold 200 and the second mold 201 are brought into the mold closed state. Thereafter, the cavity is filled with the aluminum alloy in the molten state, and the aluminum alloy in the molten state is molded by the molding surfaces of the first mold 200 and the second mold 201 and is then solidified by waiting until a predetermined time elapses. Thereafter, the first mold 200 is moved upward to the mold open state. At this time, each of the ribs 116a to 116e, 117a to 117d, 126a to 126e, 127a to 127d, 130a, 131a, and 140 have a posture that protrudes upward or downward. Thus, when the ribs 116a to 116e, 117a to 117d, 126a to 126e, 127a to 127d, 130a, 131a, and 140 are molded, setting of a slide mold or the like may be unnecessary.

When the mold is opened, the rear vehicle body frame member 100 that has been molded in the posture illustrated in FIG. 9 is obtained. At this time, an angle α that is defined by the straight line L1 and a horizontal plane S1 is less than 90°, and the straight line L1 is inclined at the angle α with respect to the horizontal plane S1.

When the angle that is defined by the straight line L1 and the horizontal plane S1 is α, a dimension (a maximum dimension A2 illustrated in FIG. 9) of a projection surface of the rear vehicle body frame member 100 from above in a direction orthogonal to the vehicle width direction is shorter than a dimension (a maximum dimension A1 illustrated in FIG. 5 and FIG. 7) of a projection surface of the rear vehicle body frame member 100 in a vehicle plan view in the direction orthogonal to the vehicle width direction. That is, in the present embodiment, the rear vehicle body frame member 100 is cast by the first mold 200 and the second mold 201 in the posture in which the ribs 116a to 116e, 117a to 117d, 126a to 126e, 127a to 127d, 130a, 131a, and 140 protrude upward or downward and in a state where the rear vehicle body frame member 100 is rotated in the vehicle side view in such a direction that the dimension A2 in the direction orthogonal to the vehicle width direction (the left-right direction) of the projection surface from above becomes shorter than the dimension in the direction A1 orthogonal to the vehicle width direction of the projection surface in the vehicle plan view (a plan view in the assembled state to the vehicle) of the rear vehicle body frame member 100.

At this time, the right rear connection portion 114 illustrated in FIG. 11 may also be integrally or unitarily molded. Here, since scales of the rear vehicle body frame member 100 in FIG. 5, FIG. 7, and FIG. 9 are different, a relationship between the dimensions A1, A2 may not be the above relationship but satisfies the above relationship when the scale is the same.

For example, when the angle that is defined by the straight line L1 and the horizontal plane S1 exceeds the predetermined angle α, and when the angle is smaller than α, the dimension A2 of the projection surface of the rear vehicle body frame member 100 from above in the direction orthogonal to the vehicle width direction is longer than that when the angle is α. In the case where the dimension A2 of the projection surface of the rear vehicle body frame member 100 from above in the direction orthogonal to the vehicle width direction during casting becomes long, the molds 200, 201 may be enlarged to increase a difficulty in manufacturing. In short, in the manufacturing method according to the present embodiment, the first mold 200 and the second mold 201 can be downsized by setting the posture of the rear vehicle body frame member 100 such that the dimension A2 of the projection surface from above in the direction orthogonal to the vehicle width direction becomes short with the angle defined by the straight line L1 and the horizontal plane S1 being set as α**.** Therefore, the rear vehicle body frame member 100 can be manufactured easily.

### (Modified Examples of Embodiment)

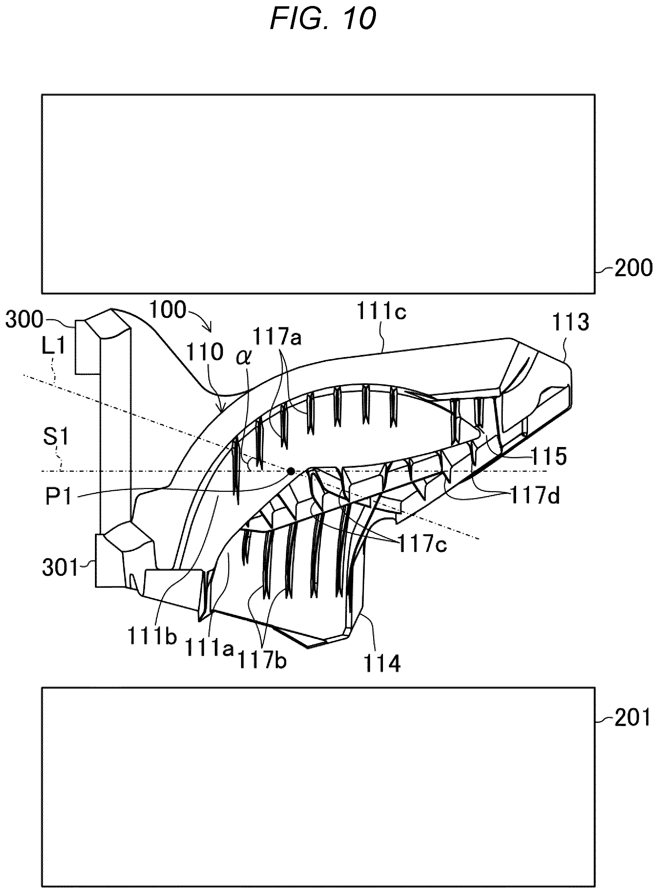

FIG. 10 is a view illustrating a state immediately after casting of the rear vehicle body frame member 100 according to a modified example of the embodiment of the invention. The rear vehicle body frame member 100 according to this modified example includes a header 300 and/or a deck member 301. This FIG. 10 illustrates an example in which the rear vehicle body frame member 100 includes both the header 300 and the deck member 301. However, only one of the header 300 and the deck member 301 may be included.

Each of the header 300 and the deck member 301 may be a coupling member that couples an upper portion of the right rear suspension tower portion 110 and an upper portion of the left rear suspension tower portion 120. A position of the deck member 301 is lower than a position of the header 300, is relatively close to the coupling portion 130, and thus can be referred to as a lower coupling member.

For example, the deck member 301 is integrally or unitarily molded with the upper portion of the right rear suspension tower portion 110 and the upper portion of the left rear suspension tower portion 120.

The header 300 may be relatively away from the coupling portion 130 and thus can be referred to as an upper coupling member. Both sides of the header 300 in the left-right direction are integrally or unitarily molded with the upper portion of the right rear suspension tower portion 110 and the upper portion of the left rear suspension tower portion 120, respectively.

By integrally or unitarily molding the header 300 and the deck member 301 with the right rear suspension tower portion 110 and the left rear suspension tower portion 120, the number of the components can be reduced. In addition, by providing the header 300 and the deck member 301, the rigidity of the rear vehicle body frame member 100 can be improved.

Particularly, in this modified example, the header 300 is separated from the upper portion of the right rear suspension tower portion 110 and the upper portion of the left rear suspension tower portion 120 in a direction parallel to an extending direction of the ribs 116a to 116e, 117a to 117d, and is in a positional relationship in which the header 300 overlaps the upper portion of the right rear suspension tower portion 110 and the upper portion of the left rear suspension tower portion 120 each other in a plan view immediately after casting. In this way, it is possible to downsize the projection surface of the rear vehicle body frame member 100 having the header 300 during casting.

### (Operational Effects of Embodiment)

As it has been described so far, according to the present embodiment, since the right rear suspension tower portion 110 and the left rear suspension tower portion 120 are integrally or unitarily molded by casting in the state of being coupled by the coupling portion 130, it is possible to reduce the number of the components of the rear vehicle body frame member 100.

Since the ribs 116a to 116e, 117a to 117d, 126a to 126e, 127a to 127d, 130a, 131a, and 140, which protrude forward or rearward, are integrally or unitarily molded with the vehicle body frame member 100, it is possible to obtain the vehicle body frame member 100 that has the high rigidity to the input of the impact load from behind, for example.

When being cast, this vehicle body frame member 100 is in the posture that the ribs 116a to 116e, 117a to 117d, 126a to 126e, 127a to 127d, 130a, 131a, and 140 protrude upward or downward, in the posture that the upper wall portion 114a and the lower wall portion 114b of the right rear connection portion 114 extend upward, and in the posture that the dimension in the direction A2 orthogonal to the vehicle width direction of the projection surface of the vehicle body frame member 100 is reduced. Thus, it is possible to improve the rigidity to the input load during the collision while casting of the vehicle body frame member 100 is facilitated.

The above-described embodiment is merely illustrative in all respects, and should not be construed in a limited manner. Furthermore, all modifications and variations that fall within the scope equivalent to the claims are intended to fall within the scope of the invention.

### [Industrial Applicability]

As it has been described so far, the present invention can be used for the rear vehicle body frame member of the automobile, for example.

### [Reference Signs List]

100: rear vehicle body frame member
110: right rear suspension tower portion
114: right rear connection portion (concave portion)
114a: upper wall portion
114b: lower wall portion
116a: first right inner rib
117a: first right outer rib
120: left rear suspension tower portion
130: coupling portion
200, 201: mold
300: header (coupling member)
301: deck member (coupling member)
A: rear vehicle body structure

## Claims

1. A vehicle body structure (A) in which a suspension tower portion (110) on one side in a vehicle width direction and a suspension tower portion (120) on another side in the vehicle width direction are coupled by a coupling portion (130) and that is integrally or unitarily molded with at least one rib (116a to 116e, 117a to 117d, 126a to 126e, 127a to 127d, 130a, 131a, and 140) that protrudes forward or rearward in a vehicle, the vehicle body structure (A) comprising:
a concave portion (114) that is formed to be opened forward in the vehicle and recessed rearward in the vehicle, wherein
the concave portion (114) has an upper wall portion (114a) and a lower wall portion (114b) which extend in the same direction as the rib (116a to 116e, 117a to 117d, 126a to 126e, 127a to 127d, 130a, 131a, and 140).

2. The vehicle body structure (A) according to claim 1, wherein
the concave portion (114) is configured to be connected to a front end portion of a frame (19a, 19b) that extends in a vehicle front-rear direction.

3. The vehicle body structure (A) according to claim 1 or 2, wherein
the rib (116a to 116e, 117a to 117d, 126a to 126e, 127a to 127d, 130a, 131a, and 140) is configured to continue from at least one of the suspension tower portion (110) on the one side in the vehicle width direction and the suspension tower portion (120) on the another side in the vehicle width direction to the coupling portion (130).

4. The vehicle body structure (A) according to any one of the preceding claims, further comprising a coupling member (300, 301) that couples an upper portion of the suspension tower portion (110) on the one side in the vehicle width direction and an upper portion of the suspension tower portion (120) on the another side in the vehicle width direction, wherein
the coupling member (300, 301) is integrally or unitarily molded with the suspension tower portion (110) on the one side in the vehicle width direction and the suspension tower portion (120) on the another side in the vehicle width direction.

5. The vehicle body structure (A) according to claim 4, wherein
the coupling member (300, 301) is away from the upper portion of the suspension tower portion (110) on the one side in the vehicle width direction and the upper portion of the suspension tower portion (120) on the another side in the vehicle width direction in a direction parallel to an extending direction of the rib (116a to 116e, 117a to 117d, 126a to 126e, 127a to 127d, 130a, 131a, and 140).

6. The vehicle body structure (A) according to any one of the preceding claims, wherein
the rib (116a to 116e, 117a to 117d, 126a to 126e, 127a to 127d, 130a, 131a, and 140) includes: an inner rib (116a to 116e) that is integrally or unitarily molded on a vehicle inner side of the suspension tower portion (110); and an outer rib (117a to 117d) that is integrally or unitarily molded on a vehicle outer side of the suspension tower portion (120).

7. A vehicle comprising the vehicle body structure (A) according to any one of the preceding claims.

8. A mold (200, 201) configured to mold the vehicle body structure (A) according to any one of claims 1 to 6.

9. A method of manufacturing a vehicle body frame member (100) in which a suspension tower portion (110) on one side in a vehicle width direction and a suspension tower portion (120) on another side in the vehicle width direction are coupled by a coupling portion (130) and that is integrally or unitarily molded with at least one rib (116a to 116e, 117a to 117d, 126a to 126e, 127a to 127d, 130a, 131a and 140) that protrudes forward or rearward in a vehicle in an assembled state to the vehicle, the method comprising:
preparing a mold (200, 201) whose division direction is an up-down direction or a vertical direction; and
casting the vehicle body frame member (100) by the mold (200, 201) in a state of being rotated, in a vehicle side view, in a direction in which a dimension (A2) of a projection surface from above in a direction orthogonal to the vehicle width direction is shorter than a dimension (A1) of a projection surface in a direction orthogonal to the vehicle width direction in a vehicle plan view, and in a posture that the rib (116a to 116e, 117a to 117d, 126a to 126e, 127a to 127d, 130a, 131a, and 140) protrudes upward or downward.

10. The method according to claim 9, further comprising:
molding the rib (116a to 116e, 117a to 117d, 126a to 126e, 127a to 127d, 130a, 131a, and 140) in a state of being inclined with respect to a vehicle front-rear direction.

11. The method according to claim 9 or 10, further comprising:
making the rib (116a to 116e, 117a to 117d, 126a to 126e, 127a to 127d, 130a, 131a, and 140) continue from at least one of the suspension tower portion (110) on the one side in the vehicle width direction and the suspension tower portion (120) on the another side in the vehicle width direction to the coupling portion (130).

12. The method according to any one of claims 9 to 11, further comprising:
integrally or unitarily molding a coupling member (300, 301) that couples an upper portion of the suspension tower portion (110) on the one side in the vehicle width direction and an upper portion of the suspension tower portion (120) on the another side in the vehicle width direction.

13. The method according to claim 12, wherein
the coupling member (300, 301) is integrally or unitarily molded in a state of being away from the upper portion of the suspension tower portion (110) on the one side in the vehicle width direction and the upper portion of the suspension tower portion (120) on the another side in the vehicle width direction in a direction parallel to an extending direction of the rib (116a to 116e, 117a to 117d, 126a to 126e, 127a to 127d, 130a, 131a, and 140).

14. The method according to any one of claims 9 to 13, wherein
the rib (116a to 116e, 117a to 117d, 126a to 126e, 127a to 127d, 130a, 131a, and 140) includes: an inner rib (116a to 116e) that is integrally or unitarily molded on a vehicle inner side of the suspension tower portion (110); and an outer rib (117a to 117d) that is integrally or unitarily molded on a vehicle outer side of the suspension tower portion (120), and
the vehicle body frame member (100) is cast in a posture that the inner rib (116a to 116e) and the outer rib (117a to 117d) protrude upward or downward.
